# EUROPEAN PATENT APPLICATION

(11) **EP 2 889 328 A1**
(43) Date of publication of application: **01.07.2015**
(21) Application number: 13831284.8
(22) Date of filing: 20.08.2013
(51) Int. Cl.: C08L 23/06, B29C 49/00, B65D 1/00, B65D 1/02, B65D 65/02, B29K 23/00

(54) **BLOW-MOLDED CONTAINER, AND RESIN COMPOSITION FOR BLOW-MOLDED CONTAINER**

(30) Priority: 23.08.2012 JP 2012184498
(71) Applicant: Hosokawa Yoko Co., Ltd., Tokyo 102-0084 (JP)
(72) Inventor: IWASAKI Toshiharu, Tokyo 102-0084 (JP); KAGEYAMA Yohei, Tokyo 102-0084 (JP); KOBAYASHI Yukio, Tokyo 143-0023 (JP); KOTANI Masataka, Tokyo 102-0084 (JP); MIYAZAKI Munenori, Tokyo 102-0084 (JP)
(74) Representative: Wallinger, Michael
(86) International application number: PCT/JP2013/072191
(87) International publication number: WO 2014/030642

(57) **Abstract**

A blow-molded container is provided obtained by blow-molding a resin composition containing the following components (A) to (C): (A) 78 parts by mass to 55 parts by mass of a linear low-density polyethylene having a density of 910 kg/m³ to 925 kg/m³ and a melt mass flow rate of 1.5 g/10 minutes or more and less than 3.0 g/10 minutes; (B) 15 parts by mass to 25 parts by mass of a high-density polyethylene having a density of 945 kg/m³ to 970 kg/m³ and a melt mass flow rate of 1.0 g/10 minutes to 3.0 g/10 minutes; and (C) 7 parts by mass to 20 parts by mass of a low-density polyethylene having a density of 910 kg/m³ to 930 kg/m³ and a melt mass flow rate of 0.5 g/10 minutes to 8.0 g/10 minutes.

## Description

### Technical Field

The present invention relates to a blow-molded container which is filled with a liquid or the like, and a resin composition for a blow-molded container.

Priority is claimed on Japanese Patent Application No. 2012-184498, filed August 23, 2012, the content of which is incorporated herein by reference.

### Background Art

A blow-molded container is widely used as a container for liquids of food, cosmetics, and pharmaceuticals.

In general, the blow-molded container for food and pharmaceuticals is subjected to heat treatment for sterilization.

In recent years, it has been recommended that the sterilizing temperature of pharmaceuticals provided in the form of an aqueous solution be 121°C, at which bacteria having heat resistance can be sufficiently killed. Therefore, it is required that the container for liquid pharmaceuticals have heat resistance for heat sterilization at 121°C.

It is also required for the container for pharmaceuticals to be transparent in order to easily check for foreign substances within the contents.

In the related art, as the material for the blow-molded container for pharmaceuticals, polyethylene and polypropylene have been used.

Polypropylene has more excellent heat resistance and transparency than polyethylene and endures sterilization at 121°C. However, the thermal stability and the moldability are not sufficient and an additive needs to be blended in order to avoid such defects. When an additive is blended, the additive itself bleeds out or the additive is extracted by the content of the container and thus there is a concern of hygienic properties being deteriorated.

In contrast, in a case of polyethylene, since an additive does not need to be added, polyethylene has excellent hygienic properties but has insufficient heat resistance.

A method for improving the heat resistance of a blow-molded container composed of polyethylene-based resin has been investigated.

For example, in Patent Document 1, a blow-molded container is disclosed which is formed using a resin composition for a blow-molded container including two types of ethylene/α-olefin copolymers satisfying specific conditions and having different MFRs and a low-density polyethylene obtained by a high pressure radical polymerization method.

In Patent Document 2, a heat resistant blow-molded container is disclosed which is composed of a composition of an ethylene-α-olefin copolymer and a high-density polyethylene.

In Patent Document 3, a blow-molded container is disclosed which is composed of a composition of a linear low-density polyethylene, a high-density polyethylene, and a low-density polyethylene.

In Patent Document 4, a heat sterilizable blow-molded container is disclosed composed of a polyethylene-based resin which includes an intermediate layer composed of a resin composition containing an ethylene α-olefin copolymer polymerized using a metallocene catalyst as a main component and inner and outer layers composed of a resin composition containing a high-pressure low-density polyethylene as a main component.

### Document of Related Art

### Patent documents

[Patent Document 1] Japanese Unexamined Patent Application, First Publication No. H10-7848
[Patent Document2] Japanese Patent No. 3907764
[Patent Document3] Japanese Unexamined Patent Application, First Publication No. H10-330555
[Patent Document4] Japanese Unexamined Patent Application, First Publication No. 2003-182744

### Summary of Invention

### Technical Problem

However, the containers disclosed in Patent Documents1 to 4 do not have heat resistance to endure heating at 121°C.

An object of the present invention is to provide a blow-molded container having heat resistance to endure heating at 121 °C and excellent transparency and hygienic properties. Further, another object thereof is to provide a resin composition for a blow-molded container to obtain the blow-molded container.

### Solution to Problem

A blow-molded container according to the present invention is obtained by blow-molding a resin composition containing the following components (A) to (C):
(A) 78 parts by mass to 55 parts by mass of a linear low-density polyethylene having a density of 910 kg/m³ to 925 kg/m³ and a melt mass flow rate, measured under conditions of a temperature of 190°C and a load of 21.6 N, of 1.5 g/10 minutes or more and less than 3.0 g/10 minutes; (B) 15 parts by mass to 25 parts by mass of a high-density polyethylene having a density of 945 kg/m³ to 970 kg/m³ and a melt mass flow rate, measured under conditions of a temperature of 190°C and a load of 21.6 N, of 1.0 g/10 minutes to 3.0 g/10 minutes; and (C) 7 parts by mass to 20 parts by mass of a low-density polyethylene having a density of 910 kg/m³ to 930 kg/m³ and a melt mass flow rate, measured under conditions of a temperature of 190°C and a load of 21.6 N, of 0.5 g/10 minutes to 8.0 g/10 minutes.

A resin composition for a blow-molded container according to the present invention contains the following components (A) to (C):
(A) 78 parts by mass to 55 parts by mass of a linear low-density polyethylene having a density of 910 kg/m³ to 925 kg/m³ and a melt mass flow rate, measured under conditions of a temperature of 190°C and a load of 21.6 N, of 1.5 g/10 minutes or more and less than 3.0 g/10 minutes; (B) 15 parts by mass to 25 parts by mass of a high-density polyethylene having a density of 945 kg/m³ to 970 kg/m³ and a melt mass flow rate, measured under conditions of a temperature of 190°C and a load of 21.6 N, of 1.0 g/10 minutes to 3.0 g/10 minutes; and (C) 7 parts by mass to 20 parts by mass of a low-density polyethylene having a density of 910 kg/m³ to 930 kg/m³ and a melt mass flow rate, measured under conditions of a temperature of 190°C and a load of 21.6 N, of 0.5 g/10 minutes to 8.0 g/10 minutes.

### Effects of the Invention

The blow-molded container of the present invention has heat resistance to endure heating at 121°C and excellent transparency and hygienic properties.

According to the resin composition for a blow-molded container of the present invention, it is possible to obtain a blow-molded container having heat resistance to endure heating at 121 °C and excellent transparency and hygienic properties.

### Description of Embodiments

### <Resin Composition for Blow-Molded Container>

A component (A) contained in a resin composition for a blow-molded container of the present invention (hereinafter, simply referred to as a "resin composition") is a linear low-density polyethylene.

The linear low-density polyethylene is a copolymer of ethylene and α-olefin. Examples of the α-olefin include propylene, 1-butene, 1-hexene, 4-methyl-1-pentene, and 1-octene.

In addition, examples of the linear low-density polyethylene include polyethylene polymerized using a metallocene catalyst and polyethylene polymerized using a Ziegler catalyst. From the viewpoint of increasing the transparency of the blow-molded container, polyethylene polymerized using a metallocene catalyst is preferred.

The density of the linear low-density polyethylene of the component (A) is 910 kg/m³ to 925 kg/m³ and preferably 910 kg/m³ to 920 kg/m³. When the density of the linear low-density polyethylene is less than the lower limit, a parison easily adheres to a cutting blade at the time of cutting of the parison in blow molding and thus defective cutting occurs in some cases. On the other hand, when the density of the linear low-density polyethylene is more than the upper limit, the transparency is easily deteriorated. Particularly, the transparency is easily deteriorated after heat sterilization at 121°C.

The melt mass flow rate (hereinafter, also referred to as "MFR") of the linear low-density polyethylene of the component (A) is 1.5 g/10 minutes or more and less than 3.0 g/10 minutes. When the MFR of the linear low-density polyethylene is less than the lower limit, at the time of extrusion molding to obtain a parison, the temperature needs to be increased to a high temperature of 200°C or higher for stable molding and then the resin is easily deteriorated. In addition, when the MFR of the linear low-density polyethylene is less than the lower limit, there is difficulty in molding at a temperature of lower than 200°C. On the other hand, when the MFR of the linear low-density polyethylene is the upper limit or more, the shape of the parison is not easily maintained and thus drawdown, neck-in, and the like are easily caused.

Further, all the MFRs in the present invention are values measured under conditions of a temperature of 190°C and a load of 21.6 N.

A component (B) contained in the resin composition of the present invention is a high-density polyethylene.

The high-density polyethylene is a polyethylene containing a unit mainly derived from ethylene and may contain a small amount of an α-olefin unit of 5 mole% or less. The α-olefin unit contained in the high-density polyethylene is the same as the α-olefin unit contained in the linear low-density polyethylene.

The density of the high-density polyethylene of the component (B) is 945 kg/m³ to 970 kg/m³ and preferably 950 kg/m³ to 960 kg/m³. The high-density polyethylene whose density is within the above range can be easily acquired. In addition, when the density of the high-density polyethylene is within the above range, a blow-molded container having an excellent balance between heat resistance and transparency can be easily obtained.

The MFR of the high-density polyethylene of the component (B) is 1.0 g/10 minutes to 3.0 g/10 minutes. When the MFR of the high-density polyethylene is less than the lower limit, the miscibility of the component (A) and a component (C) is deteriorated and thus the surface of the blow-molded container becomes rough and the gloss is deteriorated. When the gloss of the container is deteriorated, the visual transparency is deteriorated. On the other hand, when the MFR of the high-density polyethylene is more than the upper limit, the shape of the parison is not easily maintained and thus drawdown, neck-in, and the like are easily caused.

The component (C) contained in the resin composition of the present invention is a low-density polyethylene. The low-density polyethylene is typically obtained by high-pressure polymerization.

The density of the low-density polyethylene of the (C) is 910 kg/m³ to 930 kg/m³. The low-density polyethylene whose density is within the above range can be easily acquired.

The MFR of the low-density polyethylene of the (C) is 0.5 g/10 minutes to 8.0 g/10 minutes and preferably 0.5 g/10 minutes to 5.0 g/10 minutes. When the MFR of the low-density polyethylene is less than the lower limit, the external appearance of the parison is poor and thus the external appearance of the blow-molded container is also poor in some cases. When the MFR of the low-density polyethylene is more than the upper limit, the shape of the parison is not easily maintained and thus drawdown, neck-in, and the like are easily caused.

The content of each component is 78 parts by mass to 55 parts by mass of the component (A), 15 parts by mass to 25 parts by mass of the component (B), and 7 parts by mass to 20 parts by mass of the component (C). The preferred content of each component is 78 parts by mass to 63 parts by mass of the component (A), 15 parts by mass to 25 parts by mass of the component (B), and 7 parts by mass to 12 parts by mass of the component (C).

When the content of the component (A) is less than the lower limit, the transparency is deteriorated and when the content thereof is more than the upper limit, the shape of the parison is not easily maintained and thus drawdown, neck-in, and the like are easily caused.

When the content of the component (B) is less than the lower limit, the heat resistance is deteriorated and when the content thereof is more than the upper limit, the transparency is deteriorated.

When the content of the component (C) is less than the lower limit, the shape of the parison is not easily maintained at the time of blow molding and thus drawdown, neck-in, and the like are easily caused. When the content thereof is more than the upper limit, the external appearance of the parison is poor and thus the external appearance of the blow-molded container is also poor in some cases.

When a blow-molded container obtained using a resin composition of the present invention is used for pharmaceuticals, it is preferable not to add any additives to the resin composition. When an additive is added, the additive is eluted into the content of the pharmaceuticals and the number of fine particles in the content is increased and thus hygienic properties become deteriorated in some cases.

However, when the blow-molded container obtained using the resin composition is not used for pharmaceuticals, an additive may be added to the resin composition of the present invention within a range not deteriorating the hygienic properties. Examples of the additive include phenol-based antioxidants, phosphorus-based antioxidants, and

### neutralizing agents.

The above-described resin composition can be obtained by mixing each component. As a mixing method, a dry blending method, a mixing method using an extruder or a kneader in a molten state, a method of dissolving components in a hydrocarbon-based solvent and mixing the components in a solution state, and the like are used.

### <Blow-Molded Container>

The blow-molded container of the present invention can be obtained by blow-molding the above-described resin composition.

As for the blow molding, various blow molding methods such as direct blow molding in combination with an extruder, injection blow molding in combination with an injection molding machine, and biaxial stretching blow (stretch blow) molding can be adopted.

The molding temperature during the blow molding is typically within a range of 150°C to 250°C. However, from the viewpoint of energy saving, the temperature is preferably within a range of 150°C or higher and lower than 200°C. The above-described resin composition has sufficient moldability and thus can be blow-molded even when the molding temperature is lower than 200°C. Further, when the molding temperature is lower than 150°C, the resin composition is not sufficiently melted and thus there may be difficulty in molding.

The shape of the blow-molded container of the present invention is not particularly limited and for example, may be a container having a volume of 10 mL to 2000 mL and a thickness of 200 µm to 1000 µm. In addition, the blow-molded container of the present invention may be provided with a rubber plug that seals a spout or a hanging tool.

The blow-molded container of the present invention may be a single layer container or a multilayer container. However, from the viewpoint of a low price and more excellent heat resistance, a single layer container is preferred.

When the container is a multilayer container, at least one layer may be a layer formed from the above-described resin composition.

Examples of layers other than the layer formed from the above-described resin composition include a layer which prevents content adsorption or sorption, a layer which increases gas barrier properties, and a layer which increases steam barrier properties. Examples of the resin for forming other layers include polyesters (polyethylene terephthalate, polytrimethylene terephthalate, polybutylene terephthalate, polyethylene naphthalate, polybutylene naphthalate, polycyclohexylene dimethylene terephthalate and the like), cyclic polyolefins, ethylene-vinyl alcohol copolymers, and MXD nylon.

### [Examples]

### (Examples 1 to 4 and Comparative Example 1 to 11)

Components (A) to (C) having compositions shown in Tables 1 and 2 were mixed to obtain resin compositions.

Resins used in the components (A) to (C) are as follows.

### Component (A) (Linear Low-density Polyethylene)

LL1: Resin (MFR: 1.0 g/10 minutes, density: 910 kg/m³) produced by polymerization using a metallocene catalyst
LL2: Resin (MFR: 2.0 g/10 minutes, density: 913 kg/m³) produced by polymerization using a metallocene catalyst
LL3: Resin (MFR: 4.0 g/10 minutes, density: 913 kg/m³) produced by polymerization using a metallocene catalyst
LL4: Resin (MFR: 4.0 g/10 minutes, density: 903 kg/m³) produced by polymerization using a metallocene catalyst
LL5: Resin (MFR: 2.0 g/10 minutes, density: 915 kg/m³) produced by polymerization using a Ziegler catalyst
LL6: Resin (MFR: 2.0 g/10 minutes, density: 926 kg/m³) produced by polymerization using a metallocene catalyst

### Component (B) (High-Density Polyethylene)

HD1: Resin (MFR: 1.8 g/10 minutes, density: 954 kg/m³) produced by polymerization using a Ziegler catalyst
HD2: Resin (MFR: 3.5 g/10 minutes, density: 954 kg/m³) produced by polymerization using a Ziegler catalyst
HD3: Resin (MFR: 0.9 g/10 minutes, density: 954 kg/m³) produced by polymerization using a Ziegler catalyst

### Component (C) (Low-Density Polyethylene)

LD1: MFR: 0.9 g/10 minutes, density: 928 kg/m³
LD2: MFR: 2.0 g/10 minutes, density: 922 kg/m³
LD3: MFR: 10.0 g/10 minutes, density: 917 kg/m³
LD4: MFR: 0.3 g/10 minutes, density: 927 kg/m³

### <Measurement of Physical Properties of Resin Composition>

The MFR and density of the resin composition in each example was measured in the following manner. The results are shown in Tables 1 and 2.

### (1) MFR

The MFR was obtained by measuring the mass of a resin extruded into a strand shape at 190°C with a load of 21.6 N for 10 minutes according to the Japanese Industrial Standard JIS K 7210 using a melt indexer.

### (2) Density

The strand obtained when the MFR was measured was subjected to heat treatment at 100°C for 1 hour and gradually cooled to room temperature for 1 hour to obtain a sample and then the density was measured according to the Japanese Industrial Standard JIS K 7112 D using a density gradient tube.

### <Evaluation of Molding Workability>

The blow moldablity and the parison molding workability of the resin composition in each example were evaluated in the following manner. The results are shown in Tables 1 and 2.

### (1) Blow Moldability

Using a blow molding machine manufactured by Tahara Machinery Ltd. (having an extruder screw diameter of 45 mm), a 100-ml container having a thickness of 330 µm was blow-molded under conditions of a resin temperature of 190°C and a die temperature of 20°C to evaluate the blow moldability based on the following criteria.
A: The container was able to be blow-molded.
B: The container was not able to be blow-molded.

### (2) Parison Molding Workability

Shape of parison: The parison extruded from a die head was evaluated by visual observation.
A: The shape was maintained without partial thickness reduction by drawdown or swelling.
B: Partial thickness reduction was observed.

Parison cutting properties: The cutting properties when the upper portion of the parison was cut using a cutter were evaluated by visual observation.
A: The parison was cut satisfactorily.
B: The deformation of the parison was observed at the time of cutting.
C: The resin adhered to the blade at the time of cutting.

### (3) Molding Stability

Comprehensive evaluation was performed based on the shape of the parison and the parison cutting properties. When the molding stability is low, the practicality is not sufficient.
A: Evaluation results of both the shape of the parison and the parison cutting properties are A.
B: An evaluation result of either of the shape of the parison and the parison cutting properties is a grade other than A.

### (4) External Appearance of Parison

The external appearance of the parison was evaluated by visual observation based on the following criteria.
A: No fluctuation was observed in the parison and the parison seemed to be uniform.
B: Little fluctuation was observed in the parison and the parison seemed to be non-uniform, but there is no practical problem.
C: Fluctuation was observed in the parison and the parison seemed to be considerably non-uniform.

Further, the fluctuation of the parison is considered to be caused by the non-uniformity of the reflective index and the non-uniformity of the reflective index is estimated to be caused by non-melting of some of the components.

### <Evaluation of Blow-Molded Container>

100 mL of distilled water was poured into a blow-molded container and a spout was sealed with a rubber plug. Then, the container was subjected to heat treatment at 121°C for 30 minutes using a spray type sterilization machine manufactured by Hisaka Works, Ltd. The external appearance of the blow-molded container after the heat treatment was evaluated and the physical properties were measured. The evaluation results and the measurement results are shown in Tables 1 and 2.

### (1) External Appearance

The external appearance was visually observed and evaluated based on the following criteria. When the external appearance is good, the heat resistance is excellent.
A: Deformation caused by heat treatment was not observed.
B: Deformation caused by heat treatment was observed.

### (2) Light Transmittance

The light transmittance was obtained by measuring the transmittance of light having a wavelength of 450 nm by ultraviolet-visible spectrophotometry according to the Japanese Pharmacopoeia (sixteenth edition). In the Japanese Pharmacopoeia, it is prescribed that the light transmittance of the container is 55% or more.

### (3) Gloss

The gloss was measured at an incident angle of 60 degrees according to ASTM D 2457. Further, when the gloss is low, the visual transparency is low

**[Table 1]**

| | | Catalyst | MFR | Density | Example | | | |
|---|---|---|---|---|---|---|---|---|
| | | | g/10 minutes | kg/m³ | 1 | 2 | 3 | 4 |
| (A) | LL1 | m | 1.0 | 910 | | | | |
| | LL2 | m | 2.0 | 913 | 60 | 60 | 70 | |
| | LL3 | m | 4.0 | 913 | | | | |
| | LL4 | m | 4.0 | 903 | | | | |
| | LL5 | z | 2.0 | 915 | | | | 60 |
| | LL6 | m | 2.0 | 926 | | | | |
| (B) | HD1 | z | 1.8 | 954 | 20 | 20 | 20 | 20 |
| | HD2 | z | 3.5 | 954 | | | | |
| | HD3 | z | 0.9 | 954 | | | | |
| (C) | LD1 | - | 0.9 | 928 | 20 | | | |
| | LD2 | - | 2.0 | 922 | | 20 | 10 | 20 |
| | LD3 | - | 10.0 | 917 | | | | |
| | LD4 | - | 0.3 | 927 | | | | |
| Blow moldability | | | | | A | A | A | A |
| Parison molding | | Shape of parison | | | A | A | A | A |
| workability | | Parison cutting properties | | | A | A | A | A |
| | | Molding stability | | | A | A | A | A |
| | | External appearance of parison | | | B | A | A | A |
| After sterilization at 121°C | External appearance | | | | A | A | A | A |
| | Light transmittance (%) | | | | 56 | 57 | 59 | 55 |
| | Gloss | | | | 71 | 74 | 92 | 70 |

**[Table 2]**

| | | Catalyst | MFR | Density | Comparative Example | | | | | | | | | | |
|---|---|---|---|---|---|---|---|---|---|---|---|---|---|---|---|
| | | | g/10 minutes | kg/m³ | 1 | 2 | 3 | 4 | 5 | 6 | 7 | 8 | 9 | 10 | 11 |
| (A) | LL1 | m | 1.0 | 910 | | | | | | | 60 | | | | |
| | LL2 | m | 2.0 | 913 | 60 | | | 60 | 80 | 60 | | 50 | 70 | | 60 |
| | LL3 | m | 4.0 | 913 | | 60 | | | | | | | | | |
| | LL4 | m | 4.0 | 903 | | | 60 | | | | | | | | |
| | LL5 | z | 2.0 | 915 | | | | | | | | | | | |
| | LL6 | m | 2.0 | 926 | | | | | | | | | | 70 | |
| (B) | HD1 | z | 1.8 | 954 | | 20 | 20 | | 20 | 20 | 20 | 30 | 10 | 20 | 20 |
| | HD2 | z | 3.5 | 954 | 20 | | | | | | | | | | |
| | HD3 | z | 0.9 | 954 | | | | 20 | | | | | | | |
| (C) | LD1 | - | 0.9 | 928 | | | | | | | 20 | 20 | 20 | | |
| | LD2 | - | 2.0 | 922 | 20 | 20 | 20 | 20 | 0 | | | | | 10 | |
| | LD3 | - | 10.0 | 917 | | | | | | | | | | | 20 |
| | LD4 | - | 0.3 | 927 | | | | | | 20 | | | | | |
| Blow moldability | | | | | A | A | A | A | A | A | B | A | A | A | A |
| Parison molding workability | | Shape of parison | | | B | B | B | A | B | A | - | A | A | A | B |
| | | Parison cutting properties | | | A | B | C | A | A | A | - | A | A | A | A |
| | | Molding stability | | | B | B | B | A | B | A | B | A | A | A | B |
| | | External appearance of parison | | | A | A | A | B | A | B | - | A | A | A | A |
| After sterilization at 121°C | External appearance | | | | A | A | A | A | A | A | - | A | B | A | A |
| | Light transmittance (%) | | | | 57 | 57 | 57 | 56 | 57 | 56 | - | 52 | - | 49 | 57 |
| | Gloss | | | | 72 | 74 | 77 | 52 | 91 | 56 | - | 70 | - | 90 | 71 |

In Examples 1 to 4, the blow moldability, the parison molding workability, the external appearance and the transmittance after sterilization at 121°C were excellent.

In Comparative Example 1 using a high-density polyethylene having an MFR of 3.5 g/10 minutes, the parison molding workability was low and the molding stability was not sufficient.

In Comparative Examples 2 and 3 using a linear low-density polyethylene having an MFR of 4.0 g/10 minutes, the parison molding workability was low and the molding stability was not sufficient.

In Comparative Example 4 using a high-density polyethylene having an MFR of 0.9 g/10 minutes, the gloss of the blow-molded container was low and the visual transparency was not sufficient.

In Comparative Example 5 containing a linear low-density polyethylene at a content of 80 parts by mass and not containing a low-density polyethylene, the parison molding workability was low and the molding stability was not sufficient.

In Comparative Example 6 using a low-density polyethylene having an MFR of 0.3 g/10 minutes, the gloss of the blow-molded container was low and the visual transparency was not sufficient.

In Comparative Example 7 using a linear low-density polyethylene having an MFR of 1.0 g/10 minutes, the blow molding workability was low.

In Comparative Example 8 containing a high-density polyethylene at a content of 30 parts by mass, the light transmittance was low.

In Comparative Example 9 containing a high-density polyethylene at a content of 10 parts by mass, the external appearance of the container after the heat sterilization was poor and the heat resistance was not sufficient.

In Comparative Example 10 using a linear low-density polyethylene having a density of 926 kg/m³, the light transmittance was low.

In Comparative Example 11 using a low-density polyethylene having an MFR of 10.0 g/10 minutes, the parison molding workability was low and the molding stability was not sufficient.

### Industrial Applicability

The present invention provides the blow-molded container having heat resistance to endure heating at 121 °C and excellent transparency and hygienic properties.

## Claims

1. A blow-molded container obtained by blow-molding a resin composition containing the following components (A) to (C):
(A) 78 parts by mass to 55 parts by mass of a linear low-density polyethylene having a density of 910 kg/m³ to 925 kg/m³ and a melt mass flow rate, measured under conditions of a temperature of 190°C and a load of 21.6 N, of 1.5 g/10 minutes or more and less than 3.0 g/10 minutes;
(B) 15 parts by mass to 25 parts by mass of a high-density polyethylene having a density of 945 kg/m³ to 970 kg/m³ and a melt mass flow rate, measured under conditions of a temperature of 190°C and a load of 21.6 N, of 1.0 g/10 minutes to 3.0 g/10 minutes; and
(C) 7 parts by mass to 20 parts by mass of a low-density polyethylene having a density of 910 kg/m³ to 930 kg/m³ and a melt mass flow rate, measured under conditions of a temperature of 190°C and a load of 21.6 N, of 0.5 g/10 minutes to 8.0 g/10 minutes.

2. A resin composition for a blow-molded container containing the following components (A) to (C):
(A) 78 parts by mass to 55 parts by mass of a linear low-density polyethylene having a density of 910 kg/m³ to 925 kg/m³ and a melt mass flow rate, measured under conditions of a temperature of 190°C and a load of 21.6 N, of 1.5 g/10 minutes or more and less than 3.0 g/10 minutes;
(B) 15 parts by mass to 25 parts by mass of a high-density polyethylene having a density of 945 kg/m³ to 970 kg/m³ and a melt mass flow rate, measured under conditions of a temperature of 190°C and a load of 21.6 N, of 1.0 g/10 minutes to 3.0 g/10 minutes; and
(C) 7 parts by mass to 20 parts by mass of a low-density polyethylene having a density of 910 kg/m³ to 930 kg/m³ and a melt mass flow rate, measured under conditions of a temperature of 190°C and a load of 21.6 N, of 0.5 g/10 minutes to 8.0 g/10 minutes.
